# EUROPÄISCHE PATENTSCHRIFT

(11) **EP 2 846 336 B1**
(45) Veröffentlichungstag und Bekanntmachung des Hinweises auf die Patenterteilung: **04.05.2016**
(21) Anmeldenummer: 13183721.3
(22) Anmeldetag: 10.09.2013
(51) Int. Cl.: H01F 27/04, H01F 27/28, H01R 4/00, H01B 17/42

(54) **Verbindung von mindestens vier elektrischen Leitern**
Connection of at least four electrical conductors
Connexion d'au moins quatre conducteurs électriques

(43) Veröffentlichungstag der Anmeldung: 11.03.2015
(73) Patentinhaber: Siemens Aktiengesellschaft, 80333 München (DE)
(72) Erfinder: Hoppe, Jens, 90592 Schwarzenbruck (DE); Loppach, Karsten, 90482 Nürnberg (DE); Wende, Thomas, 90559 Burgthann (DE); Wimmer, Rene Martin, 92353 Postbauer-Heng (DE)

(56) Entgegenhaltungen:
- EP-A1- 0 753 900
- WO-A1-95/14313
- DE-A1-102006 038 221
- FR-A- 797 283
- JP-A- H0 669 047
- JP-A- H0 669 048
- JP-A- S5 030 018
- JP-A- H06 283 062
- JP-A- S58 222 510
- JP-U- H0 617 218
- JP-U- S5 233 010
- JP-U- S5 837 118
- JP-U- S5 837 119
- JP-U- S51 118 915
- US-A- 2 337 155
- US-A- 2 567 783
- US-A- 3 001 000
- US-A- 5 317 474
- US-A1- 2003 045 141
- US-B1- 6 890 191

## Beschreibung

Die Erfindung betrifft ein Verbindungselement zur elektrisch leitfähigen Verbindung von mindestens vier elektrischen Leitern sowie eine Verwendung eines derartigen Verbindungselements.

In elektrotechnischen Geräten und Anlagen wie Transformatoren oder Drosselspulen müssen häufig stromführende elektrische Leiter elektrisch miteinander verbunden werden. Dabei ist ein durch die elektrische Auslegung erforderlicher Platzbedarf zwischen spannungsführenden Komponenten und diese umgebenden Gehäuseteilen zu beachten. Der Platzbedarf hängt insbesondere von den elektrischen Isolationseigenschaften der Verbindung ab bzw. ein Isolationssystem muss so dimensioniert werden, dass es in ein vorgegebenes Volumen hineinpasst. Begrenzende Faktoren sind vorgegebene meist gleichbleibende Transportabmessungen des gesamten Gerätes und erhöhte Betriebsspannungsanforderungen, beispielsweise eine netzseitige Erhöhung der Betriebsspannung von 500kV auf 750kV bei HGÜ-Transformatoren, d.h. bei Transformatoren für Hochspannungs-Gleichstrom-Übertragungen.

Verbindungen elektrischer Leiter werden unter anderem in
JP S58 37119 U, JP H06 69048 A, JP H06 69047 A,
JP S58 37118 U, JP S51 118915 U, JP H06 283062 A,
JP S52 33010 U und JP S50 30018 A offenbart.

Der Erfindung liegt die Aufgabe zugrunde, ein insbesondere hinsichtlich seines Isolationsvermögens verbessertes Verbindungselement zur elektrisch leitfähigen Verbindung von mindestens vier elektrischen Leitern anzugeben, das geometrisch so kompakt dimensioniert ist, dass bei hohen Betriebsspannungen dafür ein minimaler Platzbedarf notwendig ist. Ferner liegt der Erfindung die Aufgabe zugrunde, eine verbesserte Verbindung von mindestens vier elektrischen Leitern anzugeben.

Die Aufgabe wird erfindungsgemäß hinsichtlich des Verbindungselementes durch die Merkmale des Anspruchs 1 und hinsichtlich der Verwendung des Verbindungselements zur Verbindung von mindesten vier elektrischen Leitern durch die Merkmale des Anspruchs 10 gelöst.

Vorteilhafte Ausgestaltungen der Erfindung sind Gegenstand der Unteransprüche.

Ein erfindungsgemäßes Verbindungselement zur elektrisch leitfähigen Verbindung von mindestens vier elektrischen Leitern weist eine metallische Elektrode auf, die einen Hohlraum zur Zusammenführung der der Leiter, die in dem Hohlraum elektrisch miteinander verbindbar sind, und für jeden Leiter eine Öffnung zu dem Hohlraum aufweist. Wenigstens die Außenoberfläche der Elektrode ist mit einer Papierisolation umgeben und die Elektrode ist an einer Stelle elektrisch mit den Leitern verbindbar.

Dabei ermöglichen die Öffnungen in der Elektrode, die Leiter in den Hohlraum der Elektrode zu führen, um sie dort miteinander elektrisch zu verbinden. Ein derartiges Verbindungselement ermöglicht vorteilhaft eine bauraumsparende Verbindung von mindestens vier Leitern, indem das Verbindungselement erforderlichenfalls, d.h. in Abhängigkeit von den jeweiligen Betriebsbedingungen, insbesondere von den jeweiligen elektrischen Spannungen, mit geeigneten zusätzlichen Isolationselementen gemäß den unten beschriebenen Ausführungsbeispielen versehen wird.

Eine Ausgestaltung der Erfindung sieht vor, dass jede Öffnung eine runde Kontur aufweist.

Durch die runde Ausführung der Öffnungen können vorteilhaft Ecken und Kanten vermieden werden, die starke elektrische Felder verursachen können und deshalb größere Abstände der Elektrode zu den die Elektrode umgebenden elektrisch leitfähigen Bauelementen mit anderen elektrischen Potentialen erfordern.

Eine weitere Ausgestaltung der Erfindung sieht vor, dass die metallische Elektrode im Wesentlichen zylinderförmig mit zwei Zylindergrundflächen und einem Zylindermantel ausgebildet ist und jede Zylindergrundfläche eine Öffnung aufweist und der Zylindermantel mindestens zwei Öffnungen aufweist.

Die Zylindergrundfläche kann dabei kreisförmig, oval oder auch als Vieleck mit vorzugsweise abgerundeten Ecken ausgebildet sein.

Diese Ausgestaltung der Elektrode ermöglicht insbesondere eine geometrisch vorteilhafte Zuführung der Leiter zur Elektrode und eine besonders kompakte Ausführung der Elektrode, die der Anzahl der Leiter besonders gut angepasst ist.

Eine weitere Ausgestaltung der Erfindung sieht vor, dass die Außenoberfläche der Elektrode glatt ausgebildet ist.

Unter einer glatten Außenoberfläche wird hier eine Außenoberfläche verstanden, die keine Spitzen, Ecken und Kanten aufweist. Auch eine derartige Außenoberfläche hat den Vorteil, dass Spitzen, Ecken und Kanten vermieden werden, die starke elektrische Felder verursachen können.

Weitere Ausgestaltungen der Erfindung sehen vor, dass die Elektrode wenigstens einen eine Öffnung umgebenden Elektrodenabschnitt aufweist, der torusförmig oder als ein Blech mit einem zu dem Hohlraum umgebogenen Randbereich ausgebildet ist.

Dadurch werden ebenfalls Spitzen, Ecken und Kanten im Bereich der Öffnungen vermieden, die starke elektrische Felder verursachen können.

Eine weitere Ausgestaltung der Erfindung sieht wenigstens ein um einen Abschnitt der Elektrode und deren Papierisolation herum angeordnetes Isolationselement aus Pressspan vor.

Zusätzliche Isolationselemente ermöglichen vorteilhaft eine verbesserte Isolation des Verbindungselementes, insbesondere bei hohen Spannungen. In Transformatoren oder Drosselspulen wird das Verbindungselement zudem vornehmlich in einem ölgefüllten Gehäuse angeordnet. Durch zusätzliche Isolationselemente kann das Ölvolumen in der Umgebung des Verbindungselementes mehrfach unterteilt werden. Eine derartige Unterteilung des Ölvolumens erhöht vorteilhaft weiter das Isolationsvermögen des Verbindungselementes, da eine mehrfach unterteilte Ölstrecke besser isolierend wirkt als eine gleichgroße durchgehende Ölstrecke.

Beispielsweise kann wenigstens ein erstes derartiges Isolationselement vorgesehen sein, das kappenartig um einen Abschnitt der Elektrode mit einer Öffnung ausgebildet ist und ein über der Öffnung angeordnetes und zu der Öffnung korrespondierendes Loch aufweist.

Das Loch dient dabei der Durchführung eines Leiters zu einer Öffnung und in den Hohlraum der Elektrode.

Alternativ oder zusätzlich kann wenigstens ein als ein so genanntes Kaminsegment ausgebildetes zweites Isolationselement mit einem schildartigen Abschnitt und einem rohrartigen Abschnitt vorgesehen sein, wobei der schildartige Abschnitt einen eine Öffnung enthaltenden Bereich der Elektrode umgibt und ein über der Öffnung angeordnetes und zu der Öffnung korrespondierendes Loch aufweist, und wobei der rohrartige Abschnitt sich von den Rändern dieses Loches nach außen erstreckt, so dass er eine Verlängerung der Öffnung nach außen bildet.

Das Loch gestattet wiederum die Durchführung eines Leiters zu einer Öffnung und in den Hohlraum der Elektrode. Der rohrartige Abschnitt erweitert die isolierende Wirkung des Isolationselementes vorteilhaft in eine Umgebung des Verbindungselementes, in der der Leiter verläuft.

Weiterhin kann wenigstens ein drittes Isolationselement vorgesehen sein, das rohrartig ausgebildet und um die Elektrode herum entlang einer Längsachse der Elektrode angeordnet ist und im Bereich von Öffnungen der Elektrode zu diesen Öffnungen korrespondierende Löcher aufweist.

Dadurch wird vorteilhaft eine Isolation um die gesamte Elektrode herum ermöglicht, ohne die Zuführung der Leiter zu der Elektrode zu behindern.

Vorzugsweise wird ein erfindungsgemäßes Verbindungselement zur elektrisch leitfähigen Verbindung von mindestens vier elektrischen Leitern verwendet, wobei jeder Leiter durch ein Abschirmungsrohr in eine Öffnung des Verbindungselements in den Hohlraum des Verbindungselements geführt wird und die Leiter in dem Hohlraum des Verbindungselements elektrisch miteinander verbunden werden.

Durch die Abschirmungsrohre können die Leiter vorteilhaft elektrisch abgeschirmt werden.

Vorzugsweise ragt dabei jedes Abschirmungsrohr mit einem Rohrende durch eine Öffnung in den Hohlraum der Elektrode hinein.

Dadurch kann vorteilhaft die Stabilität der Verbindung der Leiter erhöht werden, indem die Abschirmungsrohre in die Öffnungen der Elektrode gesteckt und dort gegebenenfalls befestigt werden.

Ferner kann jedes Abschirmungsrohr außerhalb des Verbindungselements von einer rohrförmigen Barriere aus Pressspan umgeben sein.

Dadurch wird die elektrische Isolation der Rohre und Leiter gegen die Umgebung vorteilhaft erhöht.

Jedes Abschirmungsrohr weist vorzugsweise ein Metallrohr auf, das außenseitig von einer Rohrpapierisolation umgeben ist.

Auch dadurch wird die elektrische Isolation der Rohre und Leiter gegen die Umgebung vorteilhaft erhöht.

Vorzugsweise ist die Elektrode ferner an einer Stelle elektrisch mit den Leitern oder mit den Leitern und den Abschirmungsrohren verbunden.

Dadurch können die Elektrode, Leiter und Abschirmungsrohre auf dasselbe elektrische Potential gelegt werden.

Insbesondere können das Verbindungselement und die Abschirmungsrohre in einem Öl innerhalb eines Gehäuses eines Transformators oder einer Drosselspule angeordnet sein und mindestens drei der Leiter mit jeweils einer Wicklung des Transformators oder der Drosselspule elektrisch leitfähig verbinden.

Auf diese Weise können vorteilhaft mindestens drei insbesondere parallel geschaltete Wicklungen eines Transformators beispielsweise mit einer Durchführung des Transformators verbunden werden. Dabei ermöglicht das erfindungsgemäße Verbindungselement kleinere Abstände der Leiter zu dem geerdeten Gehäuse des Transformators, da das Verbindungselement gemäß den obigen Ausführungen mittels der Papierisolation und Isolationselemente eine Vielzahl von Unterteilungen des Ölvolumens in dem Gehäuse ermöglicht und daher ein hohes Isolationsvermögen besitzt. Außerdem ermöglicht die Verwendung des erfindungsgemäßen Verbindungselementes den Ausgleich von Toleranzen der Leiteranordnung in horizontaler und/oder vertikaler Richtung bei sonst festgelegter Geometrie der Wicklungen im Transformator. Entsprechendes gilt für die Verwendung des Verbindungselementes in einer Drosselspule.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein erstes Ausführungsbeispiel eines Verbindungselementes für vier Leiter in einer perspektivischen Darstellung,
- FIG 2: ein zweites Ausführungsbeispiel eines Verbindungselementes für vier Leiter sowie die Leiter führende Abschirmungsrohre in einer perspektivischen Darstellung,
- FIG 3: ein drittes Ausführungsbeispiel eines Verbindungselementes für vier Leiter sowie die Leiter führende Abschirmungsrohre in einer perspektivischen Darstellung,
- FIG 4: das dritte Ausführungsbeispiel eines Verbindungselementes für vier Leiter sowie mit Barrieren umgebene die Leiter führende Abschirmungsrohre in einer perspektivischen Darstellung,
- FIG 5: das in Figur 4 dargestellte dritte Ausführungsbeispiel eines Verbindungselementes für vier Leiter sowie mit Barrieren umgebene die Leiter führende Abschirmungsrohre in einer Schnittdarstellung,
- FIG 6: das in Figur 1 dargestellte erste Ausführungsbeispiel eines Verbindungselementes für vier Leiter sowie die Leiter führende Abschirmungsrohre in einer Schnittdarstellung,
- FIG 7: ausschnittsweise eine Schnittdarstellung eines ersten Ausführungsbeispiels der Elektrode und Papierisolation eines Verbindungselementes für vier Leiter,
- FIG 8: ausschnittsweise eine Schnittdarstellung eines zweiten Ausführungsbeispiels der Elektrode und Papierisolation eines Verbindungselementes für vier Leiter,
- FIG 9: ausschnittsweise eine Schnittdarstellung eines dritten Ausführungsbeispiels der Elektrode und Papierisolation eines Verbindungselementes für vier Leiter, und
- FIG 10: schematisch einen Transformator mit einem Verbindungselement für vier Leiter, von denen drei mit je einer Wicklung des Transformators verbunden sind.

Einander entsprechende Teile sind in allen Figuren mit den gleichen Bezugszeichen versehen.

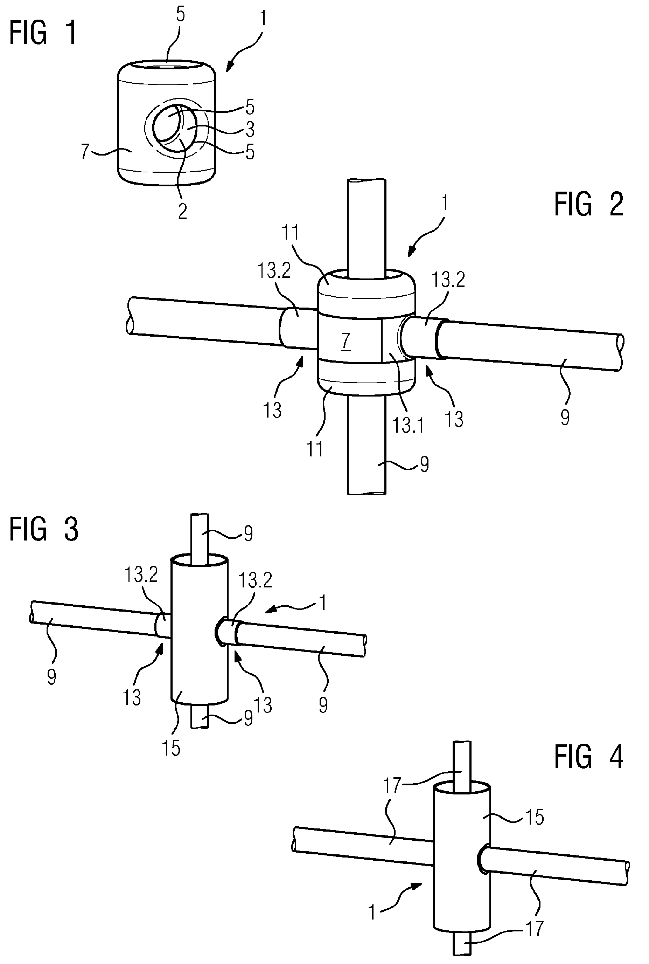

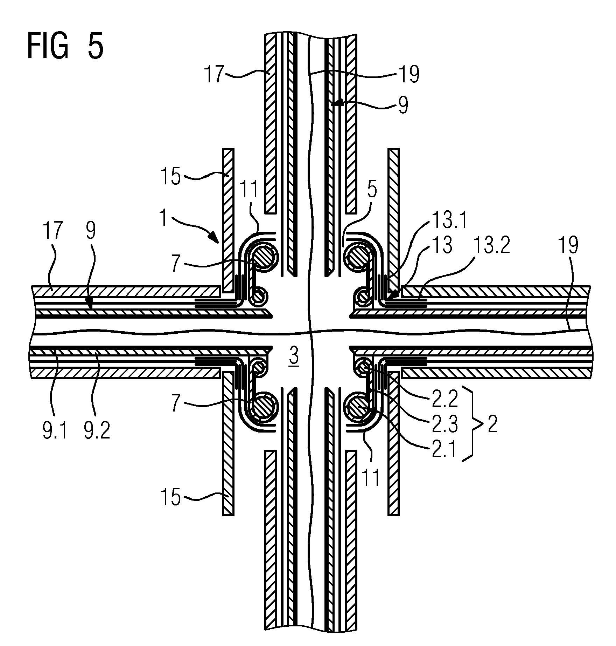

Figur 1 zeigt ein erstes Ausführungsbeispiel eines elektrischen Verbindungselementes 1 zur elektrisch leitfähigen Verbindung von vier in Figur 1 nicht dargestellten elektrischen Leitern 19 (s. Figur 5) in einer perspektivischen Darstellung. Das Verbindungselement 1 weist eine metallische Elektrode 2 auf, die einen Hohlraum 3 zur Zusammenführung der Leiter 19 und für jeden Leiter 19 eine Öffnung 5 zu dem Hohlraum 3 aufweist.

Die Elektrode 2 ist im Wesentlichen zylinderförmig mit zwei Zylindergrundflächen und einem Zylindermantel ausgebildet. Jede Zylindergrundfläche weist eine Öffnung 5 auf und der Zylindermantel weist zwei sich gegenüber liegende Öffnungen 5 auf. Die Öffnungen 5 weisen jeweils eine runde Kontur auf.

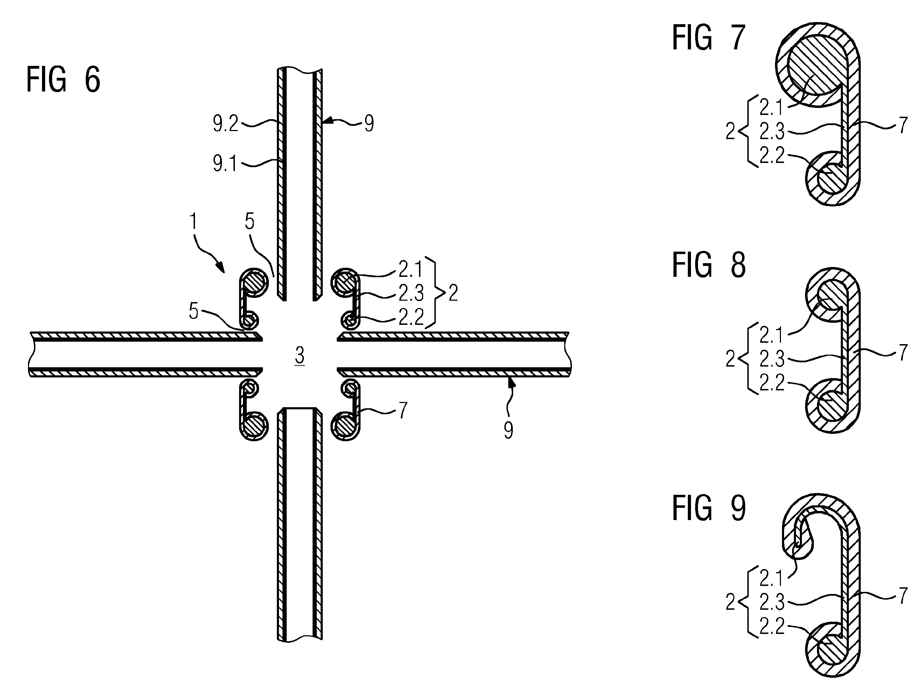

Das Verbindungselement 1 weist ferner eine Papierisolation 7 auf, die die Außenoberfläche der Elektrode 2 vollständig umgibt und je nach Ausführung der Elektrode 2 auch Teile der Innenoberfläche der Elektrode 2 umgibt (s. Figuren 7 bis 9).

Figur 2 zeigt in einer perspektivischen Darstellung ein zweites Ausführungsbeispiel eines elektrischen Verbindungselementes 1 zur elektrisch leitfähigen Verbindung von vier in Figur 2 nicht sichtbaren elektrischen Leitern 19 (s. Figur 5), die jeweils in einem Abschirmungsrohr 9 geführt sind.

Jedes Abschirmungsrohr 9 ist metallisch ausgebildet, außenseitig papierisoliert und ragt mit einem Rohrende durch eine Öffnung 5 in den Hohlraum 3 der Elektrode 2 hinein. Jeder Leiter 19 ist durch ein Abschirmungsrohr 9 in den Hohlraum 3 des Verbindungselements 1 geführt. Innerhalb des Hohlraums 3 sind die Leiter 19 miteinander elektrisch verbunden.

Das Verbindungselement 1 dieses Ausführungsbeispiels unterscheidet sich von dem in Figur 1 dargestellten Verbindungselement 1 des ersten Ausführungsbeispiels dadurch, dass es zusätzlich zu der Papierisolation 7 Isolationselemente 11, 13 aus Pressspan aufweist, die jeweils um einen Abschnitt der Elektrode 2 und deren Papierisolation 7 herum angeordnet sind.

Dabei sind zwei erste Isolationselemente 11 kappenartig um jeweils eine Zylindergrundfläche und einen daran angrenzenden Bereich des Zylindermantels der Elektrode 2 ausgebildet und weisen ein zu der Öffnung 5 in der Zylindergrundfläche korrespondierendes Loch auf, durch das ein Abschirmungsrohr 9 in die Öffnung 5 geführt ist.

Zwei zweite Isolationselemente 13 sind jeweils um eine Öffnung 5 in dem Zylindermantel herum angeordnet. Dabei weist jedes zweite Isolationselement 13 einen schildartigen Abschnitt 13.1 und einen rohrartigen Abschnitt 13.2 auf. Der schildartige Abschnitt 13.1 umgibt einen die jeweilige Öffnung 5 enthaltenden Bereich des Zylindermantels und weist ein zu der Öffnung 5 korrespondierendes Loch auf, durch das ein Abschirmungsrohr 9 in die Öffnung 5 geführt ist. Der rohrartige Abschnitt 13.2 erstreckt sich von den Rändern dieses Loches nach außen, so dass er eine Verlängerung der Öffnung 5 der Elektrode 2 nach außen bildet und einen Endbereich des in die Öffnung 5 geführten Abschirmungsrohres 9 umgibt.

Figur 3 zeigt in einer perspektivischen Darstellung ein drittes Ausführungsbeispiel eines elektrischen Verbindungselementes 1 zur elektrisch leitfähigen Verbindung von vier in Figur 3 nicht sichtbaren elektrischen Leitern 19 (s. Figur 5), die jeweils in einem Abschirmungsrohr 9 geführt sind.

Das Verbindungselement 1 dieses Ausführungsbeispiels unterscheidet sich von dem in Figur 2 dargestellten Verbindungselement 1 des zweiten Ausführungsbeispiels lediglich dadurch, dass es zusätzlich ein drittes Isolationselement 15 aus Pressspan aufweist, das rohrartig ausgebildet und um die Elektrode 2 herum entlang deren Längsachse angeordnet ist. Ferner weist das dritte Isolationselement 15 zu den Öffnungen 5 im Zylindermantel der Elektrode 2 korrespondierende Löcher auf, durch die jeweils ein Abschirmungsrohr 9 in die korrespondierende Öffnung 5 geführt ist. Abgesehen davon sind das Verbindungselement 1 dieses Ausführungsbeispiels und die Abschirmungsrohre 9 wie in dem in Figur 2 dargestellten Ausführungsbeispiel ausgebildet und angeordnet.

Figur 4 zeigt in einer perspektivischen Darstellung das in Figur 3 dargestellte dritte Ausführungsbeispiel eines elektrischen Verbindungselementes 1 mit Abschirmungsrohren 9 wie in Figur 3, wobei jedes Abschirmungsrohr 9 außerhalb des Verbindungselements 1 von einer rohrförmigen Barriere 17 aus Pressspan umgeben ist. Abgesehen davon sind das Verbindungselement 1 und die Abschirmungsrohre 9 wie in dem in Figur 3 dargestellten Ausführungsbeispiel ausgebildet und angeordnet.

Figur 5 zeigt das in Figur 4 dargestellte dritte Ausführungsbeispiel eines Verbindungselementes 1 für vier Leiter 19 sowie die mit Barrieren 17 umgebenen die Leiter 19 führenden Abschirmungsrohre 9 in einer Schnittdarstellung.

Die Leiter 19 sind seilartig oder bandartig ausgebildet.

Dargestellt ist insbesondere, dass jedes Abschirmungsrohr 9 aus einem Metallrohr 9.1, beispielsweise einem Kupferrohr, und einer das Metallrohr 9.1 umgebenden Rohrpapierisolation 9.2 besteht. Das Metallrohr 9.1 dient nicht der Stromführung, sondern der elektrischen Abschirmung des Leiters 19. Die Elektrode 2 ist vorzugsweise an einer Stelle elektrisch mit den Leitern 19 und den Metallrohren 9.1 der Abschirmungsrohre 9 verbunden.

Ferner ist eine Ausführung der Elektrode 2 mit drei Elektrodenabschnitten 2.1, 2.2, 2.3 und deren Papierisolation 7 dargestellt, die unten anhand von Figur 7 im Detail beschrieben wird und durch eine alternative Ausführung gemäß Figur 8 oder Figur 9 ersetzt werden kann. Dabei umgibt ein erster Elektrodenabschnitt 2.1 eine Öffnung 5 in einer Zylindergrundfläche der Elektrode 2, ein zweiter Elektrodenabschnitt 2.2 umgibt eine Öffnung 5 im Zylindermantel der Elektrode 2, und ein dritter Elektrodenabschnitt 2.3 verbindet einen ersten Elektrodenabschnitt 2.1 und einen zweiten Elektrodenabschnitt 2.2 und bildet einen Teil des Zylindermantels der Elektrode 2.

Nicht dargestellt sind Leisten und Klötze, die als Distanzhalter für die Isolationselemente 11, 13, 15 und Barrieren 17 dienen.

Figur 6 zeigt in einer Figur 5 entsprechenden Schnittdarstellung das in Figur 1 dargestellte erste Ausführungsbeispiel eines Verbindungselementes 1 für vier in Figur 6 nicht dargestellte Leiter 19 sowie die Leiter 19 führende Abschirmungsrohre 9. Das Verbindungselement 1 dieses Ausführungsbeispiels unterscheidet sich von dem in Figur 5 dargestellten Verbindungselement 1 dadurch, dass es keine Isolationselemente 11, 13, 15 aufweist. Ferner unterscheidet sich die in Figur 6 dargestellte Anordnung von der in Figur 5 dargestellten Anordnung dadurch, dass die Abschirmungsrohre 9 nicht von Barrieren 17 umgeben sind.

Figur 7 zeigt ausschnittsweise das in den Figuren 5 und 6 dargestellte Ausführungsbeispiel einer Elektrode 2 und ihrer Papierisolation 7 in einer Schnittdarstellung. Die beiden ersten Elektrodenabschnitte 2.1, die jeweils eine Öffnung 5 in einer Zylindergrundfläche der Elektrode 2 umgeben, sind jeweils torusförmig ausgebildet. Die zweiten Elektrodenabschnitte 2.2, die jeweils eine Öffnung 5 im Zylindermantel der Elektrode 2 umgeben, sind ebenfalls jeweils torusförmig ausgebildet, jedoch als Tori geringerer Dicke als die ersten Elektrodenabschnitte 2.1. Die dritten Elektrodenabschnitte 2.3, die jeweils einen ersten Elektrodenabschnitt 2.1 und einen zweiten Elektrodenabschnitt 2.2 verbinden und einen Teil des Zylindermantels der Elektrode 2 bilden, sind hohlzylinderförmig ausgebildet und weisen eine Zylinderwanddicke auf, die geringer als die Dicke der ersten und zweiten Elektrodenabschnitte 2.1, 2.2 ist. Die Papierisolation 7 umgibt die ersten und zweiten Elektrodenabschnitte 2.1, 2.2 sowie die Außenoberflächen der dritten Elektrodenabschnitte 2.3 und der nicht dargestellten Abschnitte der Elektrode 2, die den restlichen Zylindermantel der Elektrode 2 bilden.

Figur 8 zeigt analog zu Figur 7 ein zweites Ausführungsbeispiel einer Elektrode 2 und ihrer Papierisolation 7. Die Elektrode 2 dieses Ausführungsbeispiels unterscheidet sich von der in Figur 7 dargestellten Elektrode 2 lediglich dadurch, dass die zweiten Elektrodenabschnitte 2.2 Tori gleicher Dicke wie die ersten Elektrodenabschnitte 2.1 bilden.

Figur 9 zeigt analog zu den Figuren 7 und 8 ein drittes Ausführungsbeispiel einer Elektrode 2 und ihrer Papierisolation 7. Die Elektrode 2 dieses Ausführungsbeispiels unterscheidet sich von den in den Figuren 7 und 8 dargestellten Elektroden 2 dadurch, dass die ersten Elektrodenabschnitte 2.1 jeweils als ein Blech mit einem zu dem Hohlraum 3 umgebogenen Randbereich ausgebildet sind, wobei das Blech eine Verlängerung des dritten Elektrodenabschnitts 2.3 bildet.

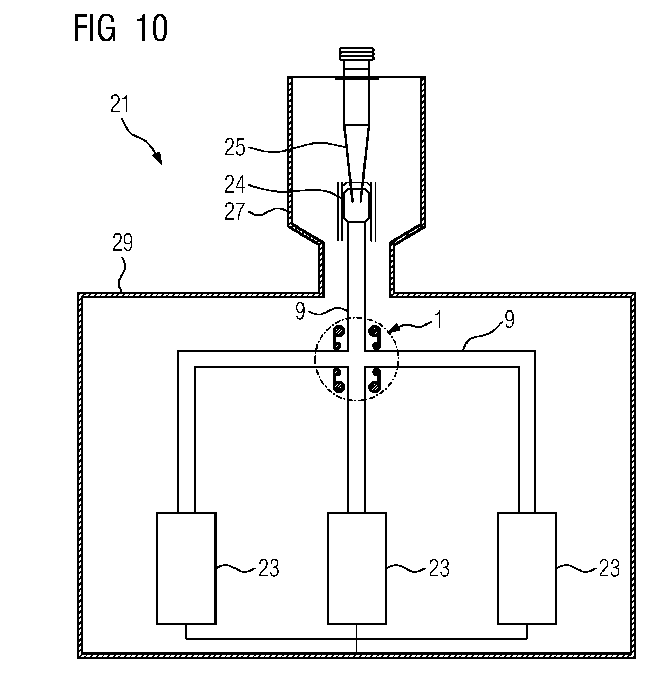

Figur 10 zeigt schematisch einen Transformator 21 mit einem Verbindungselement 1 für vier stromführende elektrische Leiter 19, von denen drei mit je einer Wicklung 23 des Transformators 21 verbunden sind. Der vierte Leiter 19 führt zu einer Durchführungselektrode 24, in der eine spannungsführende Durchführung 25 zu einem umgebenden geerdeten Dom 27 des Transformators 21 angeschlossen ist. Im Falle, dass der Transformator 21 ein HGÜ-Transformator ist, sind die Wicklungen 23 beispielsweise Netzwicklungen des HGÜ-Transformators.

Das Verbindungselement 1 ist wie in einem der oben beschriebenen Ausführungsbeispiele ausgebildet. Die Leiter 19 sind wie in Figur 5 in Abschirmungsrohren 9 geführt und im Hohlraum 3 der Elektrode 2 des Verbindungselementes 1 miteinander verbunden.

Das Verbindungselement 1 und die Abschirmungsrohre 9 sind in einem Öl innerhalb eines Gehäuses 29 (Transformatorkessels) des Transformators 21 angeordnet.

Analog kann das Verbindungselement 1 auch zur Verbindung von mit Wicklungen 23 einer Drosselspule verbundenen Leitern 19 verwendet werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen. Insbesondere kann das Verbindungselement 1 auch zur Verbindung von mehr als vier Leitern 19 ausgeführt werden, indem es mit entsprechend mehr Öffnungen 5 versehen wird.

## Patentansprüche

1. Verbindungselement (1) zur elektrisch leitfähigen Verbindung von mindestens vier elektrischen Leitern (19), wobei das Verbindungselement (1) eine metallische Elektrode (2) aufweist, die einen Hohlraum (3) zur Zusammenführung der Leiter (19), die in dem Hohlraum (3) elektrisch miteinander verbindbar sind und für jeden Leiter (19) eine Öffnung (5) zu dem Hohlraum (3) aufweist, und wenigstens die Außenoberfläche der Elektrode (2) mit einer Papierisolation (7) umgeben ist und die Elektrode (2) an einer Stelle elektrisch mit den Leitern (19) verbindbar ist.

2. Verbindungselement (1) nach Anspruch 1,
**dadurch gekennzeichnet, dass** jede Öffnung (5) eine runde Kontur aufweist.

3. Verbindungselement (1) nach einem der vorhergehenden Ansprüche,
**dadurch gekennzeichnet, dass** die metallische Elektrode (2) im Wesentlichen zylinderförmig mit zwei Zylindergrundflächen und einem Zylindermantel ausgebildet ist und jede Zylindergrundfläche eine Öffnung (5) aufweist und der Zylindermantel mindestens zwei Öffnungen (5) aufweist.

4. Verbindungselement (1) nach einem der vorhergehenden Ansprüche,
**dadurch gekennzeichnet, dass** die Außenoberfläche der Elektrode (2) glatt ausgebildet ist.

5. Verbindungselement (1) nach einem der vorhergehenden Ansprüche,
**dadurch gekennzeichnet, dass** die Elektrode (2) wenigstens einen eine Öffnung (5) umgebenden Elektrodenabschnitt (2.1, 2.2) aufweist, der torusförmig ausgebildet ist.

6. Verbindungselement (1) nach einem der vorhergehenden Ansprüche,
**dadurch gekennzeichnet, dass** die Elektrode (2) wenigstens einen eine Öffnung (5) umgebenden Elektrodenabschnitt (2.1, 2.2) aufweist, der als ein Blech mit einem zu dem Hohlraum (3) umgebogenen Randbereich ausgebildet ist.

7. Verbindungselement (1) nach einem der vorhergehenden Ansprüche,
**gekennzeichnet durch** wenigstens ein erstes Isolationselement (11) aus Pressspan, das kappenartig um einen Abschnitt der Elektrode (2) mit einer Öffnung (5) ausgebildet ist und ein über der Öffnung (5) angeordnetes und zu der Öffnung (5) korrespondierendes Loch aufweist.

8. Verbindungselement (1) nach einem der vorhergehenden Ansprüche,
**gekennzeichnet durch** wenigstens ein zweites Isolationselement (13) aus Pressspan mit einem schildartigen Abschnitt (13.1) und einem rohrartigen Abschnitt (13.2), wobei der schildartige Abschnitt (13.1) einen eine Öffnung (5) enthaltenden Bereich der Elektrode (2) umgibt und ein über der Öffnung (5) angeordnetes und zu der Öffnung (5) korrespondierendes Loch aufweist, und wobei der rohrartige Abschnitt (13.2) sich von den Rändern dieses Loches nach außen erstreckt, so dass er eine Verlängerung der Öffnung (5) nach außen bildet.

9. Verbindungselement (1) nach einem der vorhergehenden Ansprüche,
**gekennzeichnet durch** wenigstens ein drittes Isolationselement (15) aus Pressspan, das rohrartig ausgebildet und um die Elektrode (2) herum entlang einer Längsachse der Elektrode (2) angeordnet ist und im Bereich von Öffnungen (5) der Elektrode (2) zu diesen Öffnungen (5) korrespondierende Löcher aufweist.

10. Verwendung eines Verbindungselements (1) gemäß einem der vorhergehenden Ansprüche zur elektrisch leitfähigen Verbindung von mindestens vier elektrischen Leitern (19), wobei jeder Leiter (19) durch ein Abschirmungsrohr (9) in eine Öffnung (5) des Verbindungselements (1) in den Hohlraum (3) des Verbindungselements (1) geführt wird und die Leiter (19) in dem Hohlraum (3) des Verbindungselements (1) elektrisch miteinander verbunden werden.

11. Verwendung nach Anspruch 10,
**dadurch gekennzeichnet, dass** jedes Abschirmungsrohr (9) mit einem Rohrende durch eine Öffnung (5) in den Hohlraum (3) der Elektrode (2) hineinragt.

12. Verwendung nach Anspruch 10 oder 11,
**dadurch gekennzeichnet, dass** jedes Abschirmungsrohr (9) außerhalb des Verbindungselements (1) von einer rohrförmigen Barriere (17) aus Pressspan umgeben ist.

13. Verwendung nach einem der Ansprüche 10 bis 12,
**dadurch gekennzeichnet, dass** jedes Abschirmungsrohr (9) ein Metallrohr (9.1) aufweist, das außenseitig von einer Rohrpapierisolation (9.2) umgeben ist.

14. Verwendung nach einem der Ansprüche 10 bis 13,
**dadurch gekennzeichnet, dass** die Elektrode (2) an einer Stelle elektrisch mit den Leitern (19) oder mit den Leitern (19) und den Abschirmungsrohren (9) verbunden ist.

15. Verwendung nach einem der Ansprüche 10 bis 14,
**dadurch gekennzeichnet, dass** das Verbindungselement (1) und die Abschirmungsrohre (9) in einem Öl innerhalb eines Gehäuses (29) eines Transformators (21) oder einer Drosselspule angeordnet sind und mindestens drei der Leiter (19) mit jeweils einer Wicklung (23) des Transformators (21) oder der Drosselspule elektrisch leitfähig verbunden sind.

## Claims

1. Connecting element (1) for electrically conductively connecting at least four electrical conductors (19), wherein the connecting element (1) has a metallic electrode (2) which has a hollow space (3) for combining the conductors (19), which can be electrically connected to one another in the hollow space (3), and has an opening (5) to the hollow space (3) for each conductor (19), and at least the outer surface of the electrode (2) is surrounded by a paper insulation (7), and the electrode (2) can be electrically connected to the conductors (19) at one point.

2. Connecting element (1) according to Claim 1, **characterized in that** each opening (5) has a round contour.

3. Connecting element (1) according to either of the preceding claims, **characterized in that** the metallic electrode (2) is of substantially cylindrical design with two cylinder base surfaces and a cylinder casing, and each cylinder base surface has an opening (5), and the cylinder casing has at least two openings (5).

4. Connecting element (1) according to one of the preceding claims, **characterized in that** the outer surface of the electrode (2) is of smooth design.

5. Connecting element (1) according to one of the preceding claims, **characterized in that** the electrode (2) has at least one electrode section (2.1, 2.2) which surrounds an opening (5) and is of toroidal design.

6. Connecting element (1) according to one of the preceding claims, **characterized in that** the electrode (2) has at least one electrode section (2.1, 2.2) which surrounds an opening (5) and is in the form of a metal sheet with an edge region which is bent over in relation to the hollow space (3).

7. Connecting element (1) according to one of the preceding claims, **characterized by** at least one first insulation element (11) which is composed of pressboard and is designed in the form of a cap around a section of the electrode (2) with an opening (5), and has a hole which is arranged over the opening (5) and corresponds to the opening (5).

8. Connecting element (1) according to one of the preceding claims, **characterized by** at least one second insulation element (13) which is composed of pressboard and has a shield-like section (13.1) and a tubular section (13.2), wherein the shield-like section (13.1) surrounds a region of the electrode (2) which contains an opening (5), and has a hole which is arranged above the opening (5) and corresponds to the opening (5), and wherein the tubular section (13.2) extends outwards from the edges of the said hole, so that the said tubular section forms an extension to the opening (5) towards the outside.

9. Connecting element (1) according to one of the preceding claims, **characterized by** at least one third insulation element (15) which is composed of pressboard and is of tubular design and is arranged around the electrode (2) along a longitudinal axis of the electrode (2) and in the region of openings (5) in the electrode (2) has holes which correspond to the said openings (5).

10. Use of a connecting element (1) according to one of the preceding claims for electrically conductively connecting at least four electrical conductors (19), wherein each conductor (19) is guided through a shielding pipe (9) into an opening (5) in the connecting element (1) into the hollow space (3) in the connecting element (1), and the conductors (19) are electrically connected to one another in the hollow space (3) in the connecting element (1).

11. Use according to Claim 10, **characterized in that** each shielding pipe (9), by way of a pipe end, projects through an opening (5) into the cavity (3) in the electrode (2).

12. Use according to Claim 10 or 11, **characterized in that** each shielding pipe (9) is surrounded by a tubular barrier (17), which is composed of pressboard, outside the connecting element (1).

13. Use according to one of Claims 10 to 12, **characterized in that** each shielding pipe (9) has a metal pipe (9.1) which is surrounded on the outside by a tubular paper insulation (9.2).

14. Use according to one of Claims 10 to 13, **characterized in that** the electrode (2) is electrically connected to the conductors (19) or to the conductors (19) and to the shielding pipes (9) at one point.

15. Use according to one of Claims 10 to 14, **characterized in that** the connecting element (1) and the shielding pipes (9) are arranged in an oil within a housing (29) of a transformer (21) or a choke coil, and at least three of the conductors (19) are electrically conductively connected to in each case one winding (23) of the transformer (21) or of the choke coil.

## Revendications

1. Elément ( 1 ) de liaison conductrice de l'électricité d'au moins quatre conducteurs ( 19 ) électriques, l'élément ( 1 ) de liaison ayant une électrode ( 2 ) métallique qui a une cavité ( 3 ) pour réunir les conducteurs ( 19 ) qui peuvent être reliés les uns aux autres électriquement dans la cavité ( 3 ) et pour chaque conducteur ( 19 ) une ouverture ( 5 ) vers la cavité ( 3 ) et au moins la surface extérieure de l'électrode ( 2 ) est entourée d'un isolant ( 7 ) en papier et l'électrode ( 2 ) peut en un point être reliée électriquement aux conducteurs ( 19 ).

2. Elément ( 1 ) de liaison suivant la revendication 1,
**caractérisé en ce que** chaque ouverture ( 5 ) a un contour circulaire.

3. Elément ( 1 ) de liaison suivant l'une des revendications précédentes,
**caractérisé en ce que** l'électrode ( 2 ) métallique a sensiblement la forme d'un cylindre ayant deux surfaces de base de cylindre et une surface latérale de cylindre, et chaque surface de base de cylindre a une ouverture ( 5 ) et la surface latérale de cylindre a au moins deux ouvertures ( 5 ).

4. Elément ( 1 ) de liaison suivant l'une des revendications précédentes,
**caractérisé en ce que** la surface extérieure de l'électrode est lisse.

5. Elément ( 1 ) de liaison suivant l'une des revendications précédentes,
**caractérisé en ce que** l'électrode ( 2 ) a au moins un tronçon ( 2.1, 2.2 ) qui entoure une ouverture ( 5 ) et qui est en forme de tore.

6. Elément ( 1 ) de liaison suivant l'une des revendications précédentes,
**caractérisé en ce que** l'électrode ( 2 ) a au moins un tronçon ( 2.1, 2.2 ) qui entoure une ouverture ( 5 ) et qui est sous la forme d'une tôle ayant une zone de bord coudée vers la cavité ( 3 ).

7. Elément ( 1 ) de liaison suivant l'une des revendications précédentes,
**caractérisé par** au moins un premier élément ( 11 ) isolant en carton comprimé et lustré qui est constitué en capuchon autour d'un tronçon de l'électrode ( 2 ) ayant une ouverture ( 5 ) et qui a un trou disposé sur l'ouverture ( 5 ) et correspondant à l'ouverture ( 5 ).

8. Elément ( 1 ) de liaison suivant l'une des revendications précédentes,
**caractérisé par** au moins un deuxième élément ( 13 ) isolant en carton comprimé et lustré ayant un tronçon ( 13.1 ) de blindage et un tronçon ( 13.2 ) tubulaire, le tronçon ( 13.1 ) de blindage entourant une partie de l'électrode ( 2 ) comportant une ouverture ( 5 ) et ayant un trou disposé sur l'ouverture ( 5 ) et correspondant à l'ouverture ( 5 ), le tronçon ( 13.2 ) tubulaire s'étendant des bords de ce trou vers l'extérieur de manière à former un prolongement de l'ouverture ( 5 ) vers l'extérieur.

9. Elément ( 1 ) de liaison suivant l'une des revendications précédentes,
**caractérisé par** au moins un troisième élément ( 15 ) isolant en carton comprimé et lustré, qui est tubulaire et qui est disposé autour de l'électrode ( 2 ), le long d'un axe longitudinal de l'électrode ( 2 ) et qui a, dans la zone des ouvertures ( 5 ) de l'électrode ( 2 ), des trous correspondant à ces ouvertures ( 5 ).

10. Utilisation d'un élément ( 1 ) de liaison suivant l'une des revendications précédentes pour la liaison conductrice de l'électricité d'au moins quatre conducteurs ( 19 ) électriques, chaque conducteur ( 19 ) allant dans la cavité ( 3 ) de l'élément ( 1 ) de liaison par un tube ( 9 ) de blindage dans une ouverture ( 5 ) de l'élément ( 1 ) de liaison, et les conducteurs étant réunis les uns les autres électriquement dans la cavité ( 3 ) de l'élément ( 1 ) de liaison.

11. Utilisation suivant la revendication 10,
**caractérisé en ce que** chaque tube ( 9 ) de blindage pénètre par une extrémité, en passant par une ouverture ( 5 ), dans la cavité ( 3 ) de l'électrode ( 2 ).

12. Utilisation suivant la revendication 10 ou 11,
**caractérisé en ce que** chaque tube ( 9 ) de blindage est entouré à l'extérieur de l'élément ( 1 ) de liaison par une barrière ( 17 ) tubulaire en carton comprimé et lustré.

13. Utilisation suivant l'une des revendications 10 à 12,
**caractérisé en ce que** chaque tube ( 9 ) de blindage a un tube ( 9.1 ) métallique qui est entouré du côté extérieur par un isolant ( 9.2 ) en papier tubulaire.

14. Utilisation suivant l'une des revendications 10 à 13,
**caractérisé en ce que** l'électrode ( 2 ) est reliée en un point électriquement aux conducteurs ( 19 ) ou aux conducteurs ( 19 ) et aux tubes ( 9 ) de blindage.

15. Utilisation suivant l'une des revendications 10 à 14,
**caractérisé en ce que** l'élément ( 1 ) de liaison et les tubes ( 9 ) de blindage sont disposés dans une huile à l'intérieur d'une cuve ( 29 ) d'un transformateur ( 21 ) ou d'une bobine de self et au moins trois des conducteurs ( 19 ) sont reliés d'une manière conductrice de l'électricité à respectivement un enroulement ( 23 ) du transformateur ( 21 ) ou de la bobine de self.
